Europäisches Patentamt

European Patent Office

Office européen des brevets

(11) Publication number: **0 022 373**
**B2**

# (12) NEW EUROPEAN PATENT SPECIFICATION

(45) Date of publication of the new patent specification: **20.01.88**

(21) Application number: **80302308.4**

(22) Date of filing: **08.07.80**

(51) Int. Cl.⁴: **B 22 D 11/10, B 22 D 41/08, B 22 D 35/04**

(54) Continuous casting apparatus.

(30) Priority: **10.07.79 JP 86497/79**

(43) Date of publication of application:
**14.01.81 Bulletin 81/02**

(45) Publication of the grant of the patent:
**30.03.83 Bulletin 83/13**

(45) Mention of the opposition decision:
**20.01.88 Bulletin 88/03**

(84) Designated Contracting States:
**DE FR GB IT**

(56) References cited:
**AT-B- 316 036**
**DE-A-2 406 006**
**DE-A-2 652 732**
**DE-A-2 658 242**
**GB-A-1 243 778**
**US-A-3 903 955**
**US-A-4 090 552**

(73) Proprietor: **NIPPON KOKAN KABUSHIKI KAISHA**
**1-2 Marunouchi 1-chome Chiyoda-ku**
**Tokyo 100 (JP)**

(72) Inventor: **Honda, Akira**
**842-8, Ueki**
**Kamakura City Kanagawa (JP)**
Inventor: **Ishikawa, Masaru**
**324-1, Daimoncho-Daimon**
**Fukuyama City Hiroshima (JP)**
Inventor: **Mizuoka, Seishi**
**161-38, Tsunoshita Daimoncho**
**Fukuyama City Hiroshima (JP)**
Inventor: **Ono, Katsunori**
**3096, Tsunoshita Daimoncho**
**Fukuyama City Hiroshima (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

### Continuous casting apparatus

This invention relates to apparatus suitable for use in the continuous casting of metal, particularly steel. The apparatus consists essentially of a tundish containing molten metal, a continuous casting mould, arranged with its mould passage substantially horizontal, and a nozzle assembly for feeding the molten metal from the tundish to the mould.

It is desirable, for reasons of safety to the operators of the continuous casting apparatus and to obtain maximum yield, that molten metal stored in the tundish flows into the mould and the none flows out to waste between the container and the mould.

In GB—A—1243778, apparatus for continuous casting of metal is disclosed which comprises a tundish for receiving molten metal to be cast, the outlet of the tundish being constituted by a two-part nozzle of refractory material; and a continuous casting mould arranged with its mould passage substantially horizontal. In the specification, it is disclosed that the mould may be attached to a side wall of the tundish by means of a plurality of threaded bolts projecting from the side wall, with a spring around each bolt engaging with the head of the bolt and a part of the mould to urge the mould and the tundish together so that the outer face of the nozzle is urged into abutting relation with a break ring positioned at the inlet end of the mould so that the bore of the nozzle is in sealed relation with the mould passage to prevent ingress of air and egress of molten metal between the nozzle and the mould. In addition, the springs urge the adjacent ends of the two nozzles into sealing relation with each other.

The springs provide a degree of resilience which keeps the mould and tundish urged together when differential expansion occurs between the mould and the tundish when the apparatus is in use.

In this known arrangement, the springs and the bolts serve to connect the mould directly to the tundish.

In DE—A—2658242, continuous casting apparatus is disclosed in which the passage from a tundish to the inlet end of the mould is provided by a one-piece structure. This structure is urged into engagement with the mould by connecting means which act between the structure and the mould. The mould is rigidly fixed and the tundish, which is provided with wheels, is urged towards the mould so that the outlet of the tundish which is on one side of the tundish engages with the one-piece structure. The urging is brought about by connecting means which act between the tundish and an upstanding post on the side of the tundish which is opposite to the outlet of the tundish.

When there is a break ring positioned at the inlet end of the mould, and there are two nozzles between the tundish and the mould, it is sometimes difficult, if not impossible, for sufficient pressure to be obtained from springs to keep all the parts in sealing relation with each other.

The present invention seeks to overcome this difficulty.

According to the present invention,

continuous casting apparatus comprises a tundish for receiving molten metal to be cast, said tundish having an outlet opening in a side wall thereof and a first nozzle positioned in said opening;

a continuous casting mould structure arranged with its mould passage substantially horizontal and having a flange extending outwardly of the passage at its inlet end;

a break ring positioned at the inlet end of the mould passage;

a second nozzle separate from, and positioned between, said first nozzle and the break ring; and

resilient connecting means for urging the mould structure and the tundish towards each other to engage the inlet end of the second nozzle and the outlet end of the first nozzle in sealing relation, said connecting means comprising a plurality of rods projecting from said side wall of the tundish, and carrying resilient urging means;

characterised in

the provision of further connecting means urging the mould structure and the second nozzle towards each other to form a removable assembly in which the break ring is in sealing relation with both the inlet end of the mould passage and the adjacent end of the second nozzle, said connecting means comprising a collar fitted over, and bearing against, the second nozzle, a plurality of rods projecting from the collar through respective openings in the flange on the mould structure and resilient means acting between said rods and the side of the flange away from the collar; and in that each rod of the connecting means urging the mould structure and the tundish together has a lever thereon which is slidable in the direction of the length of the rod, and rotatable about the rod, each lever having a portion engaging said side of said flange away from the collar and resilient means acting between said rods and said levers.

The resilient means of the connecting means and the resilient means of the further connecting means may include springs.

Alternatively, the resilient means of the connecting means and the resilient means of the further connecting means may include hydraulic piston-cylinder devices.

In order that the invention may be more readily understood, it will now be described, by way of example only, with reference to the accompanying drawings, in which:—

Figure 1 is a sectional side view of part of a tundish and a mould in a conventional horizontal type continuous casting apparatus,

Figure 2 is a sectional view illustrating an embodiment of the apparatus in accordance with the present invention, and

Figure 3 is a sectional view illustrating another embodiment of the present invention.

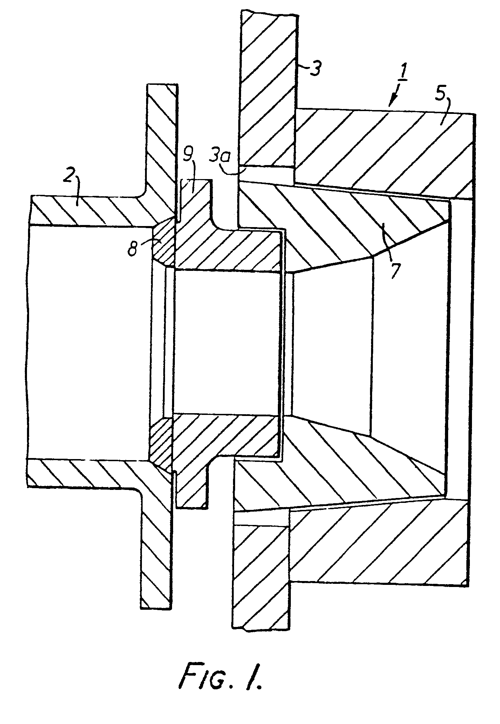

Referring to Figure 1, reference 1 is a side wall of a tundish and reference 2 is a water-cooled mould. Within a steel shell 3 of the tundish, there is a seating ring 5 attached to the steel shell and surrounding an opening 3a in the shell. A front nozzle 7 engages with the inside of the seating ring through a jointing material. The seating ring 5 is fixed to the steel shell 3 through a plurality of clamping bolts (not shown). The outer end face of the nozzle 7 has a recessed portion for receiving a feed nozzle 9, the opposite end of the nozzle 9 bearing against a break ring 8 fitted to the inlet end of the mould passage. Sealing material, such as mortar, is positioned between the nozzles 9 and 7, between the nozzle 9 and the ring 8, and between the ring 8 and the mould. Thus, molten steel contained in the tundish is supplied through the front nozzle 7, the feed nozzle 9 and the break ring 8 into the mould body 2. Although not shown in Figure 1, the tundish side wall 1 or the inlet end of the water-cooled mould is equipped with a mechanism for connecting the tundish and the mould together. This mechanism has a fastening means, such as a plurality of bolts and nuts, for tightly connecting the tundish and the water-cooled mould.

Such a connecting means between the tundish and the mould has the following problems. More particularly, the tundish and the mould are connected to each other by a tightening force of a certain fixed value established by nuts on bolts. Therefore, such tightening force of a certain fixed value urges the break ring to the inlet opening of the mould 2 and this causes one end of the feed nozzle to come into contact with the break ring, causing the other end of the feed nozzle to come into contact with the front nozzle 7 and causes the front nozzle 7 to engage with the seating means 5. Accordingly, the feed nozzle 9, for example, is affected by the heat of the molten metal which is supplied to the tundish, but the expansion of the feed nozzle, caused by this heat, is constrained by the tightening force of the bolts and nuts. Each of the afore-mentioned joint materials contracts through drying under the heat of the molten metal. Furthermore, the front nozzle 7, the break ring 8 and the feed nozzle 9 are affected by vibration caused when extracting a casting from the mould. For these reasons, the joint materials provided between the break ring 8 and the mould 2, between the feed nozzle 2 and the break ring 8, and between the feed nozzle 9 and the nozzle 7 are readily broken and cracks form therein and this results in the problem of molten metal leaking from the cracks in the joint materials.

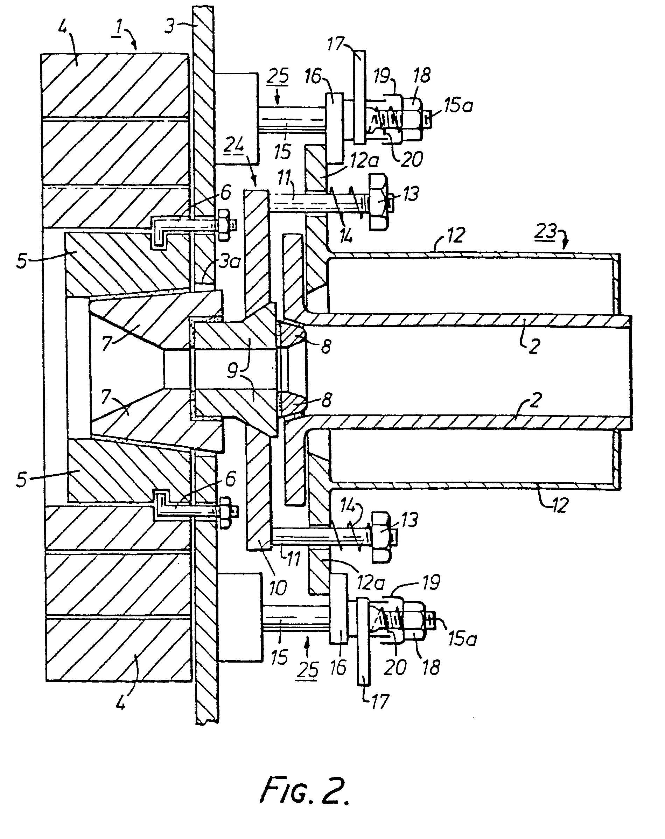

Referring now to Figure 2, 1 is the tundish side wall and 23 is the water-cooled mould. The tundish has a steel shell 3 and refractor bricks 4 arranged inside the shell. The mould has a main body 2 and a mould jacket 12. The outlet of the tundish side wall is constructed by a seating ring 5 fitted around the periphery of a hole 3a in the steel shell 3, and a front nozzle 7, having a recess for receiving a feed nozzle 9, is engaged with the seating ring thorugh a joint material such as mortar. A plurality of clamping bolts 6, fixed to the seating ring 5, extend thorugh the steel shell 3 and are tightened by nuts on the outside of the steel shell.

8 is a break ring and 9 is a feed nozzle having an enlarged portion at the outside thereof. The break ring is pushed against the inlet opening of the mould passage through a joint material and one end of the feed nozzle is pushed against the break ring through a joint material. 24 is a holding member, which includes a collar 10 and a plurality of support bolts 11. The collar has a hole for receiving the enlarged portion of the feed nozzle 9, so the nozzle may not be removed in the direction opposite to the direction in which the casting is moved. The bolts 11 are fixed to a plurality of positions on the periphery of the collar and, as shown, a plurality of holes for inserting the bolts extend through a flange 12a located on the mould jacket at the inlet end of the mould. A nut 13 and a tightening device having elastic means comprising a plurality of Belleville washers 14 are mounted on the bolts 11 and act between the flange 12a and the nut 13. The collar is pulled by the force of the Belleville springs towards the inlet side of the mould 23. As a result, the break ring 8 is pushed against the inlet opening of the mould by the elastic force of the Belleville springs 14 through the collar 10 and the feed nozzle 9. Thus, the feed nozzle 9, the break ring and the water-cooled mould 23 are integrally tightened together to form an assembly through the action of the holding member 24.

25 is a connecting mechanism comprising a plurality of posts 15, each having a connecting lever 16. The posts are connected to the outer surface of the steel shell 3 at a plurality of positions around the outlet hole 3a. The levers are fitted to the posts and are movable in the axial direction of the posts and are also rotatable. The levers 16 are integral with a manoeuvring lever 17. A threaded portion 15a on each post is provided with a tightening nut 18. Further, the posts are equipped with elastic means in the form of a plurality of Belleville washers 20 and a spring holding member 19 beteen lever 17 and nut 18. The end of the feed nozzle 9 is pushed against the nozzle 7 through a joint material. The connecting lever 16 is linked with the flange 12a of the mould jacket by operating the manoeuvring lever 17 and then the nuts 18 are tightened. As a result, the side wall of the tundish and the water-cooled mould are tightened together by the elastic forces of the Belleville springs and thus the other end of the feed nozzle 9 is pushed against the nozzle 7 by the elastic forces.

Thus, after the assembly referred to above has been formed, this assembly is offered up to the tundish so that the end of the nozzle 9 enters into the recess in the nozzle 7 and the levers 16 are pushed over the front face of the flange and thereafter, by rotating the nuts 18, the assembly is resiliently secured to the tundish.

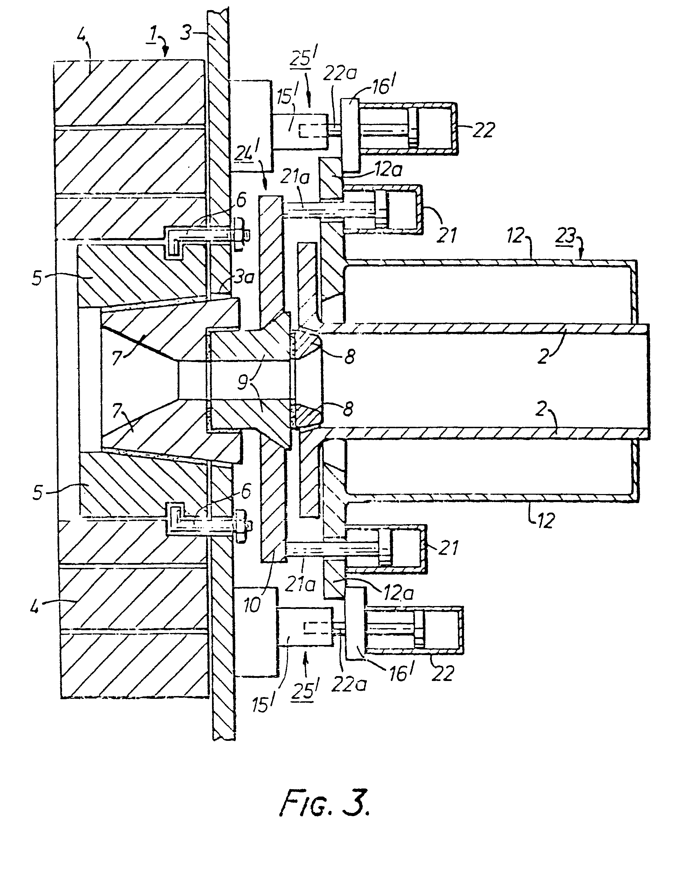

Referring to Figure 3, the flange 12a of the mould jacket is provided with a tightening mechanism having an elastic means comprising a plurality of hydraulic piston and cylinder devices. The piston rod 21a of each hydraulic piston/cylinder device 21 extends through a hole in the flange 12a and is fixed against the collar 10. By operating the hydraulic cylinders 21, the collar 10 moves forwards and backwards relative to the inlet end of the mould 23. 25' is a connecting mechanism having a plurality of connecting rods 15' and levers 16'. Each connecting rod 15' is fitted to the outer surface of the steel shell and is equipped with an elastic means comprising a hydraulic piston and cylinder device 22. The cylinder of the piston/cylinder device is fixed to the connecting lever 16' and the rod 22a extends through the connecting lever 16' and the end of the piston rod is fixed to the post 15'. The connecting lever 16' is rotatable relative to the rod 22a. By operating the hydraulic cylinders, the connecting levers 16' move forwards and backwards relative to the steel shell 3. The connecting levers 16' are thereore releasable relative to the flanges 12a.

First, the break ring 8 is fitted to the inlet opening of the mould main body 12 through a joint material. Separately, the front nozzle 7 is engaged into the seating ring 5 through a joint material. Then, the enlarged portion of the end of the feed nozzle 9 is received in a hold of the collar 10 and the collar is drawn towards the inlet side of the water-cooled mould by operating the hydraulic cylinders 21. One end of the feed nozzle is thus pushed against the break ring 8 through a joint material by the forces of the piston/cylinder devices 21. This end of the feed nozzle is thus accurately and positively positioned and brought into contact with the break ring. The other end of the feed nozzle is then received in the recess of the front nozzle through a joint material, the connecting levers are linked with the flange 12a and the levers are urged towards the tundish side wall by the operation of the piston/cylinder devices 22. As a result, the tundish side wall and the mould are tightened together by the elastic force of the piston/cylinder devices 22.

Since the force obtainable by the piston/cylinder devices is adjustable, the mould and tundish are resiliently urged together and cracks or leaks between the various components making up the continuous casting apparatus are avoided.

The hydraulic connections to the piston/cylinder devices include an accumulator for retaining the hydraulic presure in the event of a supply failure.

## Claims

1. a) Continuous casting apparatus comprising (a) a tundish for receiving molten metal to be cast, said tundish having an outlet opening (3a) in a side wall (1) thereof and a first nozzle (7) positioned in said opening;

b) a continuous casting mould structure (23) arranged with its mould passage substantially horizontal and having a flange (12a) extending outwardly of the passage at its inlet end;

c) a break ring (8) positioned at the inlet end of the mould passage;

d) a second nozzle (9) separate from, and positioned between, said first nozzle (7) and the beak ring (8); and

e) resilient connecting means (25, 25') for urging the mould structure (23) and the tundish towards each other to engage the inlet end of the second nozzle (9) and the outlet end of the first nozzle (7) in sealing relation, said connecting means comprising a plurality of rods (15, 22a) projecting from said side wall (1) of the tundish, and carrying resilient urging means;

characterised in

f) the provision of further connecting means (24, 24') urging the mould structure (23) and the second nozzle (9) towards each other to form a removable assembly in which the break ring (8) is in sealing relation with both the inlet end of the mould passage and the adjacent end of the second nozzle (9), said connecting means comprising a collar (10) fitted over, and bearing against, the second nozzle (9), a plurality of rods (11, 21a) projecting from the collar through respective openings in the flange (12a) on the mould structure and resilient means (14, 21) acting between said rods and the side of the flange (12a) away from the collar; and

g) in that each rod (15, 22a) of the connecting means (25, 25') urging the mould structure (23) and the tundish together has a lever (16, 16') thereon which is slidable in the direction of the length of the rod, and rotatable about the rod, each lever (16, 16') having a portion engaging said side of said flange (12a) away from the collar (10) and resilient means (20, 22) acting between said rods and said levers.

2. Continuous casting apparatus as claimed in claim 1, characterized in that the resilient means of the connecting means and the resilient means of the further connecting means include springs.

3. Continuous casting apparatus as claimed in claim 1, characterized in that the resilient means of the connecting means and the resilient means of the further connecting means include hydraulic piston-cylinder devices.

## Patentansprüche

1. Stanggießvorrichtung mit

a) einem Zwischenbehälter zur Aufnahme zu gießenden geschmolzenen Metalls, der in einer seiner Seitenwände (1) eine Auslaßöffnung (3a) aufweist und mit einer in dieser Öffnung angeordneten ersten Düse (7);

b) mit einer Stranggießform (23), deren Formkanal im wesentlichen horizontal verläuft und die einen Flansch (12a) aufweist, der sich am Einlaßende des Formkanals auswärts erstreckt;

c) mit einem am Einlaßende des formkanals angeordneten Abreißring (8);

d) mit einer zwischen der ersten Düse (7) und dem Abreißring (8) angeordneten, von diesen getrennten zweiten Düse (9); und

e) mit federnd nachgiebigen Mitteln (25, 25'), die die Stranggießform (23) und den Zwischenbehälter so gegeneinander vorspannen, daß das Einlaßende der zweiten Düse (9) und das Auslaßende der ersten Düse (7) abgedichtet aneinanderliegen, wobei die federnd nachgiebigen Mittel eine Mehrzahl von Stempeln (15, 22a) umfassen, die von der genannten Seitenwand (1) des Zwischenbehälters vorstehen und federnde Vorspannvorrichtungen tragen; dadurch gekennzeichnet, daß

f) weitere federnd nachgiebige Mittel (24, 24') vorgesehen sind, die die Stranggießform (23) und die zweite Düse (9) gegeneinander zur Bildung einer entfernbaren Anordnung vorspannen, in welcher der Abreißring (8) abgedichtet sowohl am Einlaßende des Formkanals als auch am benachbarten Ende der zweiten Düse (9) anliegt, wobei die weiteren federnd nachgiebigen Mittel einen Kragen (10), der über die zweite Düse (9) aufgepaßt und gegen sie gestützt ist, eine Mehrzahl von Stempeln (11, 21a), die vom Kragen durch entsprechende Öffnungen im Flansch (12a) der Stranggießform vorstehen und Federungsvorrichtungen (14, 21) umfassen, die zwischen den Stempeln und der von Kragen abgewandten Seite des Flanschs (12a) wirken; und

g) jeder Stempel (15, 22a) der die Stranggießform (23) und den Zwischenbehälter gegeneinander vorspannenden federnd nachgiebigen Mittel (25, 25') mit einem Hebel (16, 16') versehen ist, der in Längsrichtung des Stempels gleitbar und um den Stempel drehbar ist, wobei jeder Hebel (16, 16') einen Bereich umfaßt, der mit der vom Kragen (10) abgewandten Seite des Flanschs (12a) eingreift und wobei Federvorrichtungen (20, 22) in Wirkverbindung mit den Stempeln und den Hebeln stehen.

2. Stranggießvorrichtung nach Anspruch 1, dadurch gekennzeichnet, daß die Federvorrichtungen der federnd nachgiebigen Mittel und die Federungsvorrichtungen der weiteren federnd nachgiebigen Mittel Federn umfassen.

3. Stranggießvorrichtung nach Anspruch 1, dadurch gekennzeichnet, daß die Federvorrichtungen der federnd nachgiebigen Mittel und die Federungsvorrichtungen der weiteren federnd nachgiebigen Mittel hydraulische Kolben/ Zylinderanordnungen umfassen.

## Revendications

1. Appareil pour la coulée continue de métaux qui comprend

a) un bac pour recevoir le métal en fusion devant être coulé, ledit bac possédant une ouverture de sortie (3a) située dans l'une (1) de ses parois latérales et une première buse (7) placée dans ladite ouverture;

b) une structure de moule de coulée continue (23) disposée de manière que son canal soit pratiquement horizontal, et ayant une bordure (12a) s'étendant à l'extérieur de son canal, à son extrémité d'entrée;

c) une bague de séparation (8) placée à l'extrémité d'entrée du canal du moule;

d) une seconde buse (9) séparée de la première buse (7) et placée entre celle-ci (7) et la bague de séparation (8), et

e) des moyens de liaison élastiques (25, 25') pour solliciter la structure (23) et le bac l'un vers l'autre afin d'appliquer l'extrémité d'entrée de la seconde buse (9) contre l'extrémité de sortie de la première buse (7) de manière étanche, lesdits moyens de liaison comprenant un certain nombre de tiges (15, 22a) se dressant sur ladite paroi latérale (1) du bac, et portant des moyens de sollicitation élastiques, caractérisé

f) par la présence d'autres moyens de liaison (24, 24') sollicitant la structure (23) du moule et la seconde buse (9) l'une vers l'autre afin de former un ensemble amovible dans lequel la bague de séparation (8) est en relation étanche à la fois avec l'extrémité d'entrée du canal du moule, et avec l'extrémité adjacente de la seconde buse (9), lesdits moyens de liaison comrenant un collier (10), enfilé sur et portant contre la seconde buse (9), un certain nombre de tiges (11, 21a) se dressant sur le collier à travers les ouvertures respectives de la bordure (12a) sur la structure du moule, et des moyens élastiques (14, 21) agissant entre lesdits tiges et le côté de la bordure (12a) situé à l'opposé du collier; et,

g) en ce que chaque tige (15, 22a) des moyens de liaison (25, 25') sollicitant la structure (23) du moule et le bas l'un contre l'autre, comporte un levier qui peut glisser dans la direction de sa longueur et peut tourner autour de la tige, chaque levier (16, 16') ayant une partie s'appliquant contre ledit côté de ladite bordure (12a) orienté à l'opposé du collier (10), et des moyens élastiques (20, 22) agissant entre lesdites tiges et lesdits leviers.

2. Appareil pour la coulée continue de métaux selon la revendication 1, caractérisé en ce que les moyens élastiques des moyens de liaison et ceux des autres moyens de liaison comprennent des ressorts.

3. Appareil pour la coulée continue de métaux selon la revendication 1, caractérisé en ce que les moyens élastiques des moyens de liaison et ceux des autres moyens de liaison comprennent des dispositifs hydrauliques à piston et cylindre.

FIG. 1.

FIG. 2.

FIG. 3.